# EUROPEAN PATENT SPECIFICATION

(11) **EP 3 421 840 B1**
(45) Date of publication and mention of the grant of the patent: **05.08.2020**
(21) Application number: 17756551.2
(22) Date of filing: 22.02.2017
(51) Int. Cl.: F16H 9/18, F16H 63/06, F16H 55/56

(54) **ELECTRONICALLY CONTROLLED V-BELT CONTINUOUSLY VARIABLE TRANSMISSION**
ELEKTRONISCH GESTEUERTES STUFENLOSES KEILRIEMENGETRIEBE
TRANSMISSION À VARIATION CONTINUE DU TYPE À COURROIE TRAPÉZOÏDALE À COMMANDE ÉLECTRONIQUE

(30) Priority: 23.02.2016 JP 2016032399
(43) Date of publication of application: 02.01.2019
(73) Proprietor: Honda Motor Co., Ltd., Tokyo 107-8556 (JP); Musashi Seimitsu Industry Co., Ltd., Aichi 441-8560 (JP)
(72) Inventor: YOSHIZAWA, Hiroyasu, Wako-shi Saitama 351-0193 (JP); KAKEMIZU, Kenichiro, Wako-shi Saitama 351-0193 (JP); MATSUURA, Kohei, Wako-shi Saitama 351-0193 (JP); MORITA, Go, Wako-shi Saitama 351-0193 (JP); OKAMOTO, Teruhisa, Toyohashi-shi Aichi 441-8560 (JP); NUMAZAKI, Yoshimi, Toyohashi-shi Aichi 441-8560 (JP); ATSUMI, Takashi, Toyohashi-shi Aichi 441-8560 (JP)
(74) Representative: Kiwit, Benedikt
(86) International application number: PCT/JP2017/006653
(87) International publication number: WO 2017/146113

(56) References cited:
- WO-A1-2013/015243
- JP-A- 2011 033 067
- JP-A- 2013 210 078
- JP-A- 2014 055 648
- JP-A- 2014 055 649
- JP-A- 2014 196 775
- JP-A- 2015 102 119
- US-A1- 2015 094 176

## Description

### TECHNICAL FIELD

The present invention relates to an electronically controlled V-belt continuously variable transmission mounted on a vehicle.

### BACKGROUND ART

JP 2014 - 196 775 A discloses a V-belt continuously variable transmission. The V-belt continuously variable transmission employs an actuator for driving a movable sheave. The actuator is linked to a drive arm. The drive arm is relatively rotatably and axially non-movably fitted onto a movable sheave boss via a rolling bearing. Due to the driving force of the actuator being transmitted to the movable sheave, the movable sheave can be moved in the axial direction of the drive shaft.

JP 2014 - 055 648 A shows a V-belt type continuously variable transmission comprising two shift mechanisms to move a movable sheave in an axial direction of a driving shaft towards or away from a fixed sheave, wherein both sheaves are arranged around the driving shaft and are together holding a V-belt. A first shift mechanism comprises a cam member, a centrifugal weight and a weight holding plate. The centrifugal weight is arranged between the cam member and the axial movable weight holding plate. A second shift mechanism comprises an actuator driving a force transmission mechanism to move the movable sheave in an axial direction. The force transmission mechanism again comprises an anti-friction bearing, which is attached to the movable sheave and via an anti-friction-bearing supporting structure to the actuator. Therefore, the anti-friction bearing supporting structure first extends in a radial direction away from the anti-friction bearing and then bends outward in a vehicle width direction towards the actuator.

### SUMMARY OF THE INVENTION

### PROBLEMS TO BE SOLVED BY THE INVENTION

The drive arm extends in the centrifugal direction from the axis of the drive shaft to the rear of the vehicle. An output rod of the actuator is linked to the extremity of the drive arm. However, the drive arm does not enter a space radially outside the cam member.

An object of the present invention is to provide an electronically controlled V-belt continuously variable transmission mounted on a vehicle that enables the size to be made as small as possible.

### MEANS FOR SOLVING THE PROBLEMS

According to a first aspect of the present invention, there is provided an electronically controlled V-belt continuously variable transmission mounted on a vehicle comprising a fixed sheave that is fixed to a drive shaft having a rotational axis being oriented in a vehicle width direction, a movable sheave that has a movable sheave boss for receiving the drive shaft and is supported on the drive shaft so as to be capable of moving in an axial direction of the drive shaft while facing the fixed sheave, a V-belt that is wound around between the fixed sheave and the movable sheave, a first shift mechanism that comprises a cam member having a cam face and formed so as to have a smaller external diameter than an external diameter of the movable sheave, that sandwiches a centrifugal weight between the cam face and a weight retaining plate disposed so as to oppose the cam member, and that drives the centrifugal weight by means of centrifugal force accompanying rotation of the drive shaft to thus move the movable sheave in the axial direction, and a second shift mechanism that comprises a drive arm relatively rotatably and axially non-movably fitted onto the movable sheave boss via a rolling bearing and that transmits the driving force of an actuator linked to the drive arm to the movable sheave to thus move the movable sheave in the axial direction, characterized in that the drive arm has a first arm part that extends toward a radially outer side of the movable sheave and a second arm part that bends from an extremity of the first arm part, extends (inward) in the vehicle width direction, and is disposed radially outside the cam member, and at least part of the second arm part overlaps the movable sheave as seen in a direction of the rotational axis of the drive shaft.

According to a second aspect of the present invention, in addition to the first aspect, the transmission comprises a guide that is formed on the cam member and guides movement in an axial direction of the weight retaining plate, and a clearance part that is formed on the first arm part and bypasses a trajectory of the guide defined when the drive shaft rotates.

### EFFECTS OF THE INVENTION

In accordance with the first aspect, the actuator linked to the second arm part can be as close to the drive shaft as possible on the radially outer side of the cam member. Therefore, the size of the electronically controlled V-belt continuously variable transmission can be reduced. In addition, the actuator can be positioned as far inside in the vehicle width direction as possible by bending the second arm part inward in the vehicle width direction. This suppresses projection of the actuator outward in the vehicle width direction, thus allowing a larger bank angle for the vehicle. Furthermore, since the length of the drive arm can be reduced, the stiffness of the drive arm can be increased, and when a driving force acts on the drive arm from the actuator, twisting of the drive arm can be avoided.

In accordance with the second aspect, even when the cam member is disposed close to the movable sheave, interference between the drive arm and the guide of the cam member can be avoided by virtue of the function of the clearance part. In this way, the electronically controlled V-belt continuously variable transmission can be reduced in size in the vehicle width direction.

### BRIEF DESCRIPTION OF DRAWINGS

[FIG. 1] FIG. 1 is a side view schematically showing a scooter type two-wheeled motor vehicle related to one embodiment of a saddle-ridden vehicle. (first embodiment)

### [FIG. 2] FIG. 2 is an enlarged horizontal sectional view of a power unit. (first embodiment)

### [FIG. 3] FIG. 3 is an enlarged plan view of part of FIG. 2. (first embodiment)

### EXPLANATION OF REFERENCE NUMERALS AND SYMBOLS

- 32: Drive shaft (crankshaft)
- 57: Electronically controlled V-belt continuously variable transmission
- 62: Case main body forming transmission case
- 64: Case cover forming transmission case
- 71: V-belt
- 73: Fixed sheave
- 74: Movable sheave
- 74a: Movable sheave boss
- 75a: First shift mechanism
- 75b: Second shift mechanism
- 87: Cam member
- 87a: Cam face
- 92: Weight retaining plate
- 93: Centrifugal weight
- 94: Guide (guide rail)
- 114: Drive arm
- 115: Rolling bearing (ball bearing)
- 116: First arm part
- 117: Second arm part
- 118: Clearance part
- 123: Actuator (electric motor)
- Xis: Axis (rotational axis)

### MODES FOR CARRYING OUT THE INVENTION

One embodiment of the present invention is explained below by reference to the attached drawings.

### FIRST EMBODIMENT

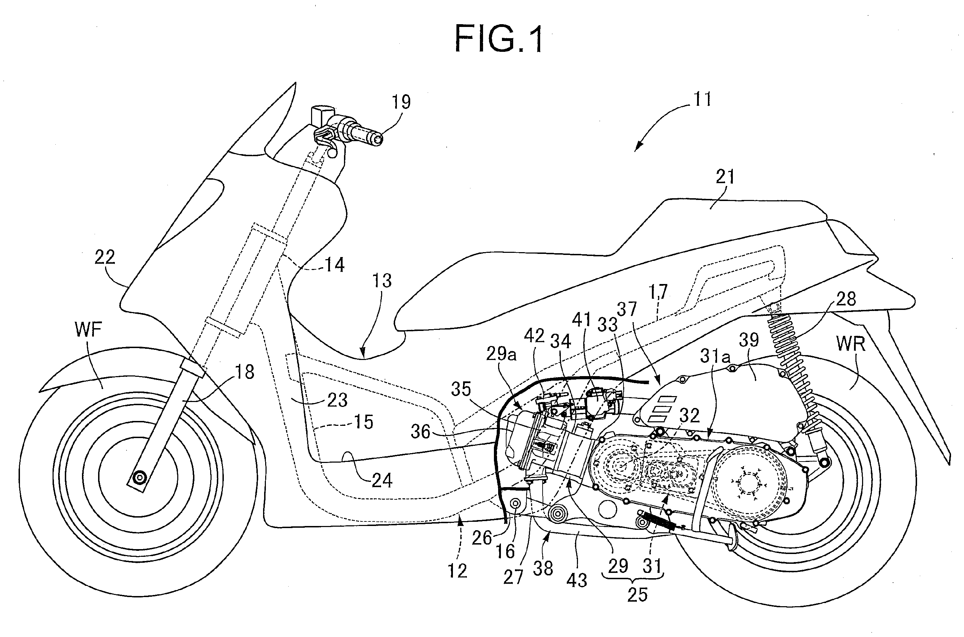

FIG. 1 schematically shows a scooter type two-wheeled motor vehicle related to one embodiment of a saddle-ridden vehicle. The two-wheeled motor vehicle 11 includes a vehicle body frame 12 and a vehicle body cover 13. The vehicle body frame 12 includes a head pipe 14 at the front end, a main frame 15 joined to the head pipe 14 via its front end, a cross pipe 16 joined to a rear part of the main frame 15 and extending in the vehicle width direction, and a pair of left and right rear frames 17 having front end parts connected to opposite end parts of the cross pipe 16 and extending in the vehicle fore-and-aft direction. A front fork 18 supporting a front wheel WF so that it can rotate around a horizontal axis and rod-shaped handlebars 19 are steerably supported on the head pipe 14.

The vehicle body cover 13 is fitted onto the vehicle body frame 12. An occupant seat 21 is mounted on the vehicle body cover 13 above the rear frame 17. The vehicle body cover 13 includes a front cover 22 that covers the head pipe 14 from the front, a leg shield 23 that is continuous from the front cover 22, and a step floor 24 that is continuous from the lower end of the leg shield 23 and is disposed above the main frame 15 between the occupant seat 21 and the front wheel WF.

A unit-swing type power unit 25 is disposed in a space beneath the rear frame 17. The power unit 25 is vertically swingably linked to a bracket 26 joined to the front end of the rear frame 17 via a link 27. A rear wheel WR is supported by the rear end of the power unit 25 so that it can rotate around a horizontal axis. A rear cushion unit 28 is disposed between the rear frame 17 and the power unit 25 at a position spaced from the link 27 and the bracket 26. The power unit 25 includes an air-cooled single-cylinder internal combustion engine 29, and a transmission device 31 that is connected to the internal combustion engine 29 and the rear wheel WR and transfers output from the internal combustion engine 29 to the rear wheel WR. A transmission case 31a of the transmission device 31 is joined to an engine main body 29a of the internal combustion engine 29.

The engine main body 29a of the internal combustion engine 29 includes a crankcase 33 that supports a crankshaft 32 so that it can rotate around a rotational axis, a cylinder block 34 that is joined to the crankcase 33, a cylinder head 35 that is joined to the cylinder block 34, and a head cover 36 that is joined to the cylinder head 35. An air intake device 37 and an exhaust device 38 are connected to the cylinder head 35. The air intake device 37 includes an air cleaner 39 that is supported on the transmission case 31a and a throttle body 41 that is disposed between the air cleaner 39 and the cylinder head 35. A fuel injection valve 42 is mounted on an upper side wall of the cylinder head 35. The exhaust device 38 includes an exhaust pipe 43 that extends rearward from a lower side wall of the cylinder head 35 while passing beneath the engine main body 29a, and an exhaust muffler (not illustrated) that is connected to the downstream end of the exhaust pipe 43 and is linked to the crankcase 33.

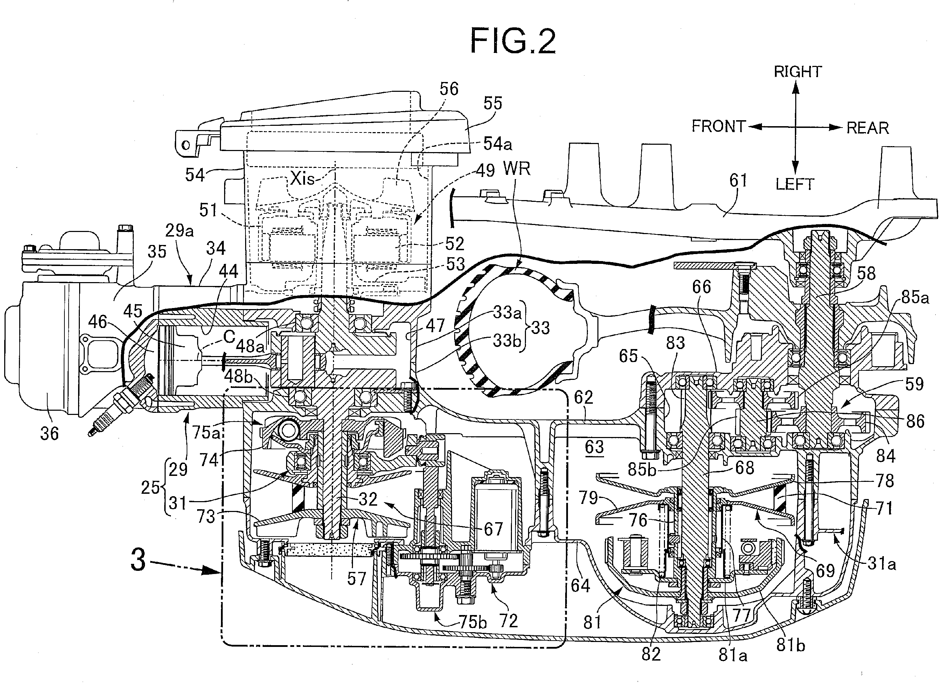

As shown in FIG. 2, a cylinder bore 44 is defined in the cylinder block 34. A piston 45 is slidably fitted into the cylinder bore 44 along a cylinder axis C. The cylinder axis C is inclined slightly upward to the front. The crankshaft 32 is linked to the piston 45. A rotational axis Xis of the crankshaft 32 is oriented in the vehicle width direction.

A combustion chamber 46 is defined in the cylinder head 35. The combustion chamber 46 is continuous from the cylinder bore 44. The piston 45 faces the cylinder head 35 and forms the combustion chamber 46 between itself and the cylinder head 35. An air-fuel mixture is introduced into the combustion chamber 46 via the air intake device 37. Exhaust gas within the combustion chamber 46 is discharged via the exhaust device 38.

The crankcase 33 is divided into a first case half body 33a and a second case half body 33b. The first case half body 33a and the second case half body 33b define in cooperation a crank chamber 47. A crank of the crankshaft 32 is housed in the crank chamber 47. The first case half body 33a has a bearing 48a that rotatably supports the crankshaft 32 whereas the second case half body 33b has a bearing 48b that rotatably supports the crankshaft 32.

A generator 49 is joined to the crankcase 33. The generator 49 includes a tubular rotor 51 that extends through the first case half body 33a of the crankcase 33 and is fixed to the crankshaft 32 protruding out of the first case half body 33a, and a stator 52 that is surrounded by the rotor 51 and is disposed around the crankshaft 32. The stator 52 is fixed to a support plate 53 fastened to the first case half body 33a. The generator 49 generates current in response to relative rotation of the rotor 51 and the stator 52.

A tubular generator cover 54 surrounding the generator 49 is joined to the first case half body 33a. An air inlet 54a is defined at an open end of the generator cover 54. A radiator 55 is disposed in the air inlet 54a. A cooling fan 56 is joined to an outer face of the rotor 51. The cooling fan 56 rotates in response to the rotation of the crankshaft 32, and cooling air flows toward the radiator 55.

The transmission device 31 is housed within the transmission case 31a and includes an electronically controlled V-belt continuously variable transmission (hereinafter called a 'transmission') 57 that steplessly changes the speed of rotational power transmitted from the crankshaft 32, and a reduction gear mechanism 59 that is housed within the transmission case 31a and reduces the speed of rotational power of the transmission 57 and transmits it to an axle 58 of the rear wheel WR. The rear wheel WR is disposed between the transmission case 31a and a support arm 61. The support arm 61 is continuous from the crankcase 33 and extends to the rear of the vehicle. The exhaust muffler described above is mounted on the support arm 61. The axle 58 of the rear wheel WR is doubly supported by the transmission case 31a and the support arm 61 so that it can rotate around its axis.

The transmission case 31a includes a case main body 62 that is continuous from the second case half body 33b of the crankcase 33, a case cover 64 that is fastened to the case main body 62 and defines a transmission chamber 63 between itself and the case main body 62, and a gear cover 66 that is fastened to the case main body 62 and defines a gear chamber 65 between itself and the case main body 62. The transmission 57 is housed in the transmission chamber 63. The reduction gear mechanism 59 is housed in the gear chamber 65. The case main body 62 and the case cover 64 in cooperation form a transmission case.

The transmission 57 includes a drive pulley 67 that is disposed within the transmission chamber 63 and is mounted on the crankshaft 32 as a drive shaft, and a driven pulley 69 that is disposed within the transmission chamber 63 and is mounted on a driven shaft 68 protruding from the transmission chamber 63 into the gear chamber 65. A V-belt 71 that is seamlessly continuous is wound around the drive pulley 67 and the driven pulley 69. As described later, due to operation of an actuator unit 72 the belt winding radius of the drive pulley 67 is electronically controlled so as to be variable. The belt winding radius of the driven pulley 69 changes in response to a change in the belt winding radius of the drive pulley 67.

The drive pulley 67 includes a fixed sheave 73 that is fixed to the crankshaft 32 and a movable sheave 74 that is supported on the crankshaft 32 so that it can move in the axial direction of the crankshaft 32 while facing the fixed sheave 73. The movable sheave 74 is disposed between the fixed sheave 73 and the second case half body 33b of the crankcase 33. The V-belt 71 is wound around between the fixed sheave 73 and the movable sheave 74. The movable sheave 74 has a movable sheave boss 74a that receives the crankshaft 32. The movable sheave boss 74a extends from a sheave body that receives the V-belt 71 toward the second case half body 33b of the crankcase 24. The transmission 57 includes a first shift mechanism 75a and a second shift mechanism 75b that includes the actuator unit 72. Axial movement of the movable sheave 74 is realized in response to operation of the first shift mechanism 75a and the second shift mechanism 75b, and the winding radius of the V-belt 71 is changed. Details of the first shift mechanism 75a and the second shift mechanism 75b are given later.

The driven pulley 69 includes an inner tube 76 that has a cylindrical shape coaxial with the driven shaft 68 and is coaxially fitted around the driven shaft 68, and an outer tube 77 that has a cylindrical shape coaxial with the driven shaft 68 and is coaxially fitted around the inner tube 76. The inner tube 76 is relatively rotatably supported on the driven shaft 68. The outer tube 77 is relatively rotatably and axially relatively displaceably supported on the inner tube 76. The fixed sheave 73 is coaxially fixed to the inner tube 76. The movable sheave 74 is coaxially fixed to the outer tube 77. The movable sheave 74 faces the fixed sheave 73, and the movable sheave 74 moves closer to the fixed sheave 73 or moves away from the fixed sheave 73 according to relative displacement in the axial direction between the outer tube 77 and the inner tube 76. The V-belt 71 is wound around between the fixed sheave 73 and the movable sheave 74.

A centrifugal clutch 81 is fitted around the driven shaft 68. The centrifugal clutch 81 includes a clutch plate 81a that is fixed to the inner tube 76. A helical spring 82 is disposed between the clutch plate 81a and the movable sheave 74. The helical spring 82 exhibits a resilient force that pushes the movable sheave 74 toward the fixed sheave 73. When the winding radius of the V-belt 71 increases for the drive pulley 67, in the driven pulley 69 the movable sheave 74 moves away from the fixed sheave 73 against the resilient force of the helical spring 82 and the winding radius of the V-belt 71 decreases.

The centrifugal clutch 81 includes an outer plate 81b fixed to the driven shaft 68. The outer plate 81b faces the clutch plate 81a. When the clutch plate 81a rotates, the outer plate 81b is joined to the clutch plate 81a by the action of centrifugal force. Rotation of the driven pulley 69 is thus transmitted to the driven shaft 68. When the engine rotational speed exceeds a set rotational speed, the centrifugal clutch 81 establishes a power transmission state.

The reduction gear mechanism 59 includes a drive gear 83 fixed to the driven shaft 68 protruding into the gear chamber 65, a final gear 84 fixed to the axle 58 of the rear wheel WR, and idle gears 85a and 98b disposed between the drive gear 83 and the final gear 84. The idle gears 85a and 85b are fixed to a common intermediate shaft 86. The drive gear 83 meshes with the idle gear 85a, and the final gear 84 meshes with the idle gear 85b. In this way, rotation of the driven shaft 68 is reduced in speed and transmitted to the axle 58 of the rear wheel WR.

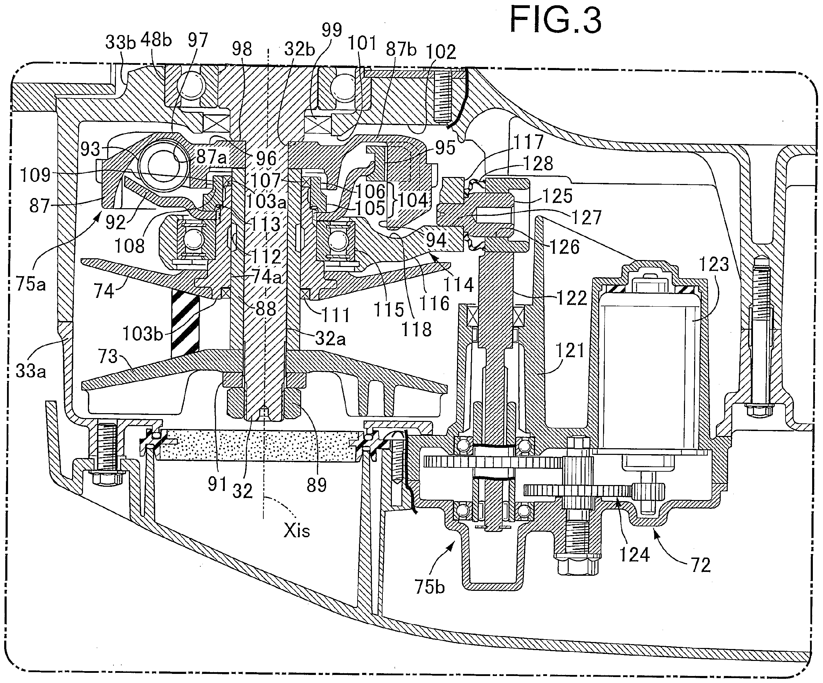

As shown in FIG. 3, the first shift mechanism 75a includes a cam member 87 disposed between the fixed sheave 73 and the second case half body 33b of the crankcase 33. The cam member 87 is fitted onto a small diameter portion 32a of the crankshaft 32 together with the fixed sheave 73 and a sleeve 88. A nut 89 is joined to the extremity of the small diameter portion 32a. In response to the nut 89 being tightened, the fixed sheave 73, the sleeve 88 and the cam member 87 are sandwiched between the nut 89 and a stepped face 32b of the small diameter portion 32a. When carrying out the sandwiching, a washer 91 may be disposed between the nut 89 and the fixed sheave 73. In this way, the fixed sheave 73 and the cam member 87 are axially relatively non-displaceably fixed on the crankshaft 32.

A weight retaining plate 92 is fitted onto the movable sheave boss 74a. The weight retaining plate 92 may be relatively non-displaceably fixed to the movable sheave 74. The weight retaining plate 92 faces a cam face 87a of the cam member 87. The weight retaining plate 92 is disposed further outside in the vehicle width direction than the cam member 87. A roller-shaped centrifugal weight 93 is sandwiched between the cam face 87a and the weight retaining plate 92. The cam face 87a moves closer to the fixed sheave 73 in moving away in the centrifugal direction from the rotational axis Xis of the crankshaft 32. Accompanying rotation of the crankshaft 32, a centrifugal force is generated in the centrifugal weight 93. The centrifugal weight 93 is displaced in the centrifugal direction by virtue of the centrifugal force. As the centrifugal weight 93 is displaced in the centrifugal direction while making rolling contact with the cam face 87a, the weight retaining plate 92 is driven toward the fixed sheave 73. In this way, the movable sheave 74 moves in the axial direction toward the fixed sheave 73 in response to rotation of the crankshaft 32.

A guide rail 94 extending in parallel with the rotational axis Xis of the crankshaft 32 is formed on the cam member 87 at a position displaced from the centrifugal weight 93 in the circumferential direction. A slider 95 is fitted to the guide rail 94 so that it can be displaced freely in parallel with the rotational axis Xis. The slider 95 is fitted onto the weight retaining plate 92. The weight retaining plate 92 is restrained with respect to the slider 95 in the circumferential direction. Axial movement of the weight retaining plate 92 causes the slider 95 to be displaced on the guide rail 94. In this way, the guide rail 94 guides axial movement of the weight retaining plate 92. The axial length of the guide rail 94 reflects the length of movement of the weight retaining plate 92, and as a result the extremity (open end) of the guide rail 94 protrudes further toward the movable sheave 74 than the weight retaining plate 92.

The cam member 87 has an outer surface 87b on the reverse side of the cam face 87a. Formed on the outer surface 87b are an annular concave face 96 that is concave toward the outside in the vehicle width direction around the crankshaft 32, a bulge face 97 that is positioned on the radially outer side of the concave face 96 and bulges inward in the vehicle width direction, and an abutment face 98 that is positioned on the radially inner side of the concave face 96 and abuts against the crankshaft 32 along the axial direction. The abutment face 98 is in intimate contact with the stepped face 32b of the small diameter portion 32a. The bulge face 97 is formed on the outer surface 87b of the cam member 87 corresponding to the cam face 87a.

An oil seal member 99 is disposed between the cam member 87 and the bearing 48b of the second case half body 33b. The oil seal member 99 is fitted into a fitting part 101 formed on the second case half body 33b. The fitting part 101 supports the oil seal member 99 while protruding toward the concave face 96 of the cam member 87 positioned outside in the vehicle width direction. The oil seal member 99 prevents oil from leaking between the crankshaft 32 and the crankcase 33 while being exposed to the rotation of the crankshaft 32. The bulge face 97 is positioned further inside in the vehicle width direction than the concave face 96 and the abutment face 98.

The fitting part 101 is provided at a position where it opposes the concave face 96. A transmission case recess part 102 that is recessed inward in the vehicle width direction from the fitting part 101 is formed in the second case half body 33b in a region that is inside the bulge face 97 in the vehicle width direction and opposes the bulge face 97. The transmission case recess part 102 opposes the bulge face 97 of the cam member 87.

A fastening member 104 is joined to a first end 103a of the movable sheave boss 74a. The fastening member 104 is disposed between the cam member 87 and the weight retaining plate 92. The fastening member 104 is fastened toward a sheave main body of the movable sheave 74 and retains the weight retaining plate 92 on the movable sheave boss 74a.

The fastening member 104 includes an annular screw part 105 having on an inner peripheral face a screw groove that is screwed onto the movable sheave boss 74a, and an annular press fitting part 106 disposed at a position that deviates from the movable sheave boss 74a in the axial direction while being continuous from the screw part 105. An oil seal member 107 is press fitted into the press fitting part 106 around the crankshaft 32. The oil seal member 107 is sandwiched between the sleeve 88 and an inner peripheral face of the press fitting part 106. The oil seal member 107 may be in intimate contact with an end face of the movable sheave boss 74a.

The cam member 87 has a housing recess part 108 housing at least partially the fastening member 104 and the oil seal member 107. The housing recess part 108 is disposed further radially inside than the cam face 87a. A clearance part 109 is formed on the fastening member 104 so as to correspond to the cam member 87. When forming the clearance part 109, a small diameter part is defined on the outer periphery of the fastening member 104.

An oil seal member 111 is disposed on a second end 103b (on the side opposite to the first end) of the movable sheave boss 74a between the crankshaft 32 and an inner peripheral face of the movable sheave boss 74a. Contact faces of the movable sheave boss 74a and the sleeve 88 are sealed by the oil seal members 107 and 111 at opposite ends (the first end 103a and the second end 103b). Grease introduced to the contact faces of the movable sheave boss 74a and the sleeve 88 is sealed by the oil seal members 107 and 111 at opposite ends.

A groove 112 is formed in an outer peripheral face of the sleeve 88 between the oil seal members 107 and 111 over the entire periphery around the crankshaft 32. Grease introduced to the contact faces of the movable sheave boss 74a and the sleeve 88 can remain in the groove 112. Grease can spread over the entire periphery of the movable sheave boss 74a via the groove 112.

An O ring 113 is disposed between the fastening member 104 and the movable sheave boss 74a. The O ring 113 establishes sealing between the fastening member 104 and the movable sheave boss 74a. It is possible to prevent the leakage of grease remaining on the movable sheave boss 74a.

The second shift mechanism 75b includes, in addition to the actuator unit 72, a drive arm 114 that is relatively rotatably and axially non-movably fitted onto the movable sheave boss 74a. When carrying out this fitting, a ball bearing 115, which is a rolling bearing, is fitted onto the movable sheave boss 74a. The ball bearing 115 is fitted, via an inner race, onto the movable sheave boss 74a. The drive arm 114 is fitted around an outer race of the ball bearing 115. In this way, relative rotation between the movable sheave 74 and the drive arm 114 is allowed, but relative movement in the axial direction is prevented.

The drive arm 114 has a first arm part 116 that extends toward the radially outer side of the movable sheave 74 and a second arm part 117 that bends from the extremity of the first arm part 116, extends inward in the vehicle width direction, and is disposed radially outside the cam member 87. The second arm part 117 extends in parallel with the rotational axis Xis of the crankshaft 32. The second arm part 117 overlaps the movable sheave 74 in the direction of the rotational axis Xis. The second arm part 117 is closer to the crankshaft 32 on the radially inner side than the external diameter of the movable sheave 74. The rear end in the vehicle fore-and-aft direction of the second arm part 117 is positioned further to the rear than the rear end in the vehicle fore-and-aft direction of the movable sheave 74. Furthermore, the front end in the vehicle fore-and-aft direction of the second arm part 117 is disposed further forward than the rear end in the vehicle fore-and-aft direction of the movable sheave 74.

A clearance part 118 that bypasses the trajectory of the guide rail 94 defined when the crankshaft 32 rotates is formed on the first arm part 116. The clearance part 118 is formed as a recess that is recessed outward in the vehicle width direction from a virtual plane that is in contact with the weight retaining plate 92 and the ball bearing 115 while being orthogonal to the rotational axis Xis. The extremity of the guide rail 94 passes through a space within the clearance part 118 when the crankshaft 32 rotates.

The actuator unit 72 includes a unit casing 121 mounted on the case cover 64. An output rod 122 is supported on the unit casing 121. The output rod 122 extends in parallel with the rotational axis Xis of the crankshaft 32. The output rod 122 is retained on the unit casing 121 so that the output rod 122 can be displaced freely in the axial direction with respect to the unit casing 121.

The actuator unit 72 includes an electric motor 123 as an actuator and a gear mechanism 124. The electric motor 123 and the gear mechanism 124 are housed within the unit casing 121. The gear mechanism 124 links the drive shaft of the electric motor 123 to the output rod 122. The rotational power of the electric motor 123 is transmitted from the gear mechanism 124 to rotational power around the output rod 122. The rotational power around the output rod 122 is converted to axial driving force of the output rod 122.

A link pin 125 is inserted into the extremity of the output rod 122. When being inserted, a pin hole 126 for the link pin 125 extends through the output rod 122. The link pin 125 has a central axis extending in the centrifugal direction of the rotational axis Xis.

The link pin 125 is inserted into the second arm part 117 of the drive arm 114. When being inserted, a receiving hole 127 for the link pin 125 extends through the second arm part 117 of the drive arm 114. A boot 128 is fitted around the link pin 125 between the output rod 122 and the second arm part 117. In this way, the extremity of the output rod 122 is linked to the drive arm 114. Axial movement of the movable sheave 74 is realized by virtue of the driving force of the electric motor 123.

In the transmission 57 the second arm part 117 is closer to the crankshaft 32 on the radially inner side than the external diameter of the movable sheave 74. The output rod 122 linked to the second arm part 117 can be as close to the crankshaft 32 as possible on the radially outer side of the cam member 87. Therefore, the size of the transmission 57 can be reduced in the fore-and-aft direction of the vehicle. Furthermore, since the length of the drive arm 114 can be reduced, the stiffness of the drive arm 114 can be increased, and when a driving force acts on the drive arm 114 via the output rod 122, twisting of the drive arm 114 can be avoided.

The rear end of the second arm part 117 is positioned further to the rear than the rear end of the movable sheave 74. When the output rod 122 is linked to the second arm part 117, since the second arm part 117 is not hidden by the movable sheave 74, a worker can view the rear end of the second arm part 117, thereby enabling the ease of assembly to be enhanced.

As described above, the clearance part 118 bypassing the trajectory of the guide rail 94 defined when the crankshaft 32 rotates is formed on the first arm part 116. Even when the cam member 87 is disposed close to the movable sheave 74, interference between the drive arm 114 and the guide rail 94 of the cam member 87 can be avoided by virtue of the function of the clearance part 118. In this way, the transmission 57 can be reduced in size in the vehicle width direction.

In the transmission 57, the concave face 96, which is recessed toward the outside in the vehicle width direction, is formed in the outer surface 87b of the cam member 87, and the fitting part 98 is formed on the second case half body 33b of the crankcase 33, the fitting part 98 supporting the oil seal member 99 while protruding toward the concave face 96. In this way, the cam member 87, the centrifugal weight 93 and the weight retaining plate 92 are disposed further inside in the vehicle width direction than the previous arrangement. As a result, even when the number of components of the first shift mechanism 75a is large, the first shift mechanism 75a can be reduced in size in the axial direction of the crankshaft 32. This enables the electric motor 123 to be disposed as far inside in the vehicle width direction as possible, thus suppressing projection of the electric motor 123 outside in the vehicle width direction. A small size can be realized for the transmission 57.

In the transmission 57, the fastening member 104 includes the screw part 103, which has on its inner peripheral face the screw groove screwed onto the movable sheave boss 74a, and the press fitting part 106, into which the oil seal member 107 is press fitted around the crankshaft 32. The oil seal member 107 is press fitted into the fastening member 104 instead of being press fitted into the movable sheave boss 74a. The fastening member 104 retains the oil seal member 107 around the crankshaft 32 (sleeve 88) instead of the movable sheave boss 74a while retaining the weight retaining plate 92 on the movable sheave boss 74a. Due to the oil seal member not being press fitted on the inside, the radial dimension of the movable sheave boss 74a can be reduced. This enables the radial dimension of the cam member 87 to also be reduced, and the electric motor 123 can accordingly be disposed closer to the drive shaft 32. In this way, the size of the transmission 57 can be reduced as much as possible.

An embodiment of the present invention is explained above, but the present invention is not limited to the above embodiment and may be modified in a variety of ways as long as the modifications do not depart from the spirit and scope thereof.

For example, the electronically controlled V-belt continuously variable transmission 57 of the present invention is not limited to one that is mounted on a scooter type two-wheeled motor vehicle, and may be used in a vehicle of any type. Furthermore, the first shift mechanism 75a of the present invention is not limited to the arrangement in which the weight retaining plate 92 is fitted onto the movable sheave boss 74a and the cam member 87 is disposed on the inside in the vehicle width direction so as to oppose the weight retaining plate 92; the cam member 87 may be fitted onto the movable sheave boss 74a, and the weight retaining plate 92 may be disposed on the inside in the vehicle width direction so as to oppose the cam member 87, thus making the weight retaining plate 92 and the cam member 87 be disposed the opposite way around.

## Claims

1. An electronically controlled V-belt continuously variable transmission mounted on a vehicle, comprising
a fixed sheave (73) that is fixed to a drive shaft (32) having a rotational axis (Xis) being oriented in a vehicle width direction,
a movable sheave (74) that has a movable sheave boss (74a) for receiving the drive shaft (32) and is supported on the drive shaft (32) so as to be capable of moving in an axial direction of the drive shaft (32) while facing the fixed sheave (73),
a V-belt (71) that is wound around between the fixed sheave (73) and the movable sheave (74),
a first shift mechanism (75a) that comprises a cam member (87) having a cam face (87a) and formed so as to have a smaller external diameter than an external diameter of the movable sheave (74), that sandwiches a centrifugal weight (93) between the cam face (87a) and a weight retaining plate (92) disposed so as to oppose the cam member (87), and that drives the centrifugal weight (93) by means of centrifugal force accompanying rotation of the drive shaft (32) to thus move the movable sheave (74) in the axial direction, and
a second shift mechanism (75b) that comprises a drive arm (114) relatively rotatably and axially non-movably fitted onto the movable sheave boss (74a) via a rolling bearing (115) and that transmits the driving force of an actuator (123) linked to the drive arm (114) to the movable sheave (74) to thus move the movable sheave (74) in the axial direction,
**characterized in that**
the drive arm (114) has a first arm part (116) that extends toward a radially outer side of the movable sheave (74) and a second arm part (117) that bends from an extremity of the first arm part (116), extends in the vehicle width direction, and is disposed radially outside the cam member (87),
and at least part of the second arm part (117) overlaps the movable sheave (74) as seen in a direction of the rotational axis (Xis) of the drive shaft (32).

2. The electronically controlled V-belt continuously variable transmission mounted on a vehicle according to Claim 1, comprising
a guide (94) that is formed on the cam member (87) and guides movement in an axial direction of the weight retaining plate (92), and
a clearance part (118) that is formed on the first arm part (116) and bypasses a trajectory of the guide (94) defined when the drive shaft (32) rotates.

## Patentansprüche

1. Elektronisch gesteuertes stufenloses Keilriemengetriebe, das an einem Fahrzeug angebracht ist, das aufweist:
eine feststehende Scheibe (73), die an einer Antriebswelle (32) befestigt ist, welche eine in einer Fahrzeugbreitenrichtung ausgerichtete Drehachse (Xis) aufweist,
eine bewegliche Scheibe (74), die einen beweglichen Scheibenvorsprung (74a) zum Aufnehmen der Antriebswelle (32) aufweist und auf der Antriebswelle (32) derart gelagert ist, dass sie sich in einer axialen Richtung der Antriebswelle (32) bewegen kann, während sie der feststehenden Scheibe (73) gegenüberliegt,
einen Keilriemen (71), der zwischen der feststehenden Scheibe (73) und der beweglichen Scheibe (74) gewickelt ist,
einen ersten Schaltmechanismus (75a), der ein Nockenelement (87) umfasst, das eine Nockenfläche (87a) aufweist und so ausgebildet ist, dass es einen kleineren Außendurchmesser als einen Außendurchmesser der beweglichen Scheibe (74) hat, der ein Zentrifugalgewicht (93) sandwichartig zwischen der Nockenfläche (87a) und einer Gewichthalteplatte (92) einschiebt, welche so angebracht ist, dass sie dem Nockenelement (87) gegenüberliegt, und der das Zentrifugalgewicht (93) mithilfe einer die Drehung der Antriebswelle (32) begleitenden Zentrifugalkraft antreibt, um damit die bewegliche Scheibe (74) in der axialen Richtung zu bewegen, sowie
einen zweiten Schaltmechanismus (75b), der einen Antriebsarm (114) umfasst, welcher relativ drehbar und axial nicht bewegbar über ein Wälzlager (115) auf den beweglichen Scheibenvorsprung (74a) aufgesetzt ist, und der die Antriebskraft eines mit dem Antriebsarm (114) verbundenen Aktuators (123) auf die bewegliche Scheibe (74) überträgt, um somit die bewegliche Scheibe (74) in der axialen Richtung zu bewegen,
**dadurch gekennzeichnet, dass**
der Antriebsarm (114) einen ersten Armteil (116), welcher sich zu einer radial äußeren Seite der beweglichen Scheibe (74) hin erstreckt, und einen zweiten Armteil (117) aufweist, der sich von einem Ende des ersten Armteils (116) krümmt, sich in der Fahrzeugbreitenrichtung erstreckt und radial außerhalb des Nockenelements (87) angeordnet ist,
und, bei Betrachtung in einer Richtung der Drehachse (Xis) der Antriebswelle (32), zumindest ein Teil des zweiten Armteils (117) die bewegliche Scheibe (74) überlagert.

2. Elektronisch gesteuertes stufenloses Keilriemengetriebe, das an einem Fahrzeug angebracht ist, nach Anspruch 1, das aufweist:
eine Führung (94), die an dem Nockenelement (87) ausgebildet ist und eine Bewegung in einer axialen Richtung der Gewichthalteplatte (92) führt, sowie
ein Abstandsteil (118), das an dem ersten Armteil (116) ausgebildet ist und eine bei Drehung der Antriebswelle (32) definierte Bewegungsbahn der Führung (94) umgeht.

## Revendications

1. Transmission à variation continue du type à courroie trapézoïdale à commande électronique montée sur un véhicule, comprenant
une poulie fixe (73) qui est fixée à un arbre d'entraînement (32) présentant un axe de rotation (Xis) qui est orienté dans une direction de la largeur du véhicule,
une poulie mobile (74) qui présente une flasque (74a) de poulie mobile pour recevoir l'arbre d'entraînement (32) et est supportée sur l'arbre d'entraînement (32) de façon à être capable de se déplacer dans une direction axiale de l'arbre d'entraînement (32) tout en faisant face à la poulie fixe (73),
une courroie trapézoïdale (71) qui est enroulée entre la poulie fixe (73) et la poulie mobile (74),
un premier mécanisme de déplacement (75a) qui comprend un élément de came (87) ayant une surface de came (87a) et formé de façon à avoir un diamètre extérieur plus petit qu'un diamètre extérieur de la poulie mobile (74), qui prend en sandwich une masselotte (93) entre la surface de came (87a) et une plaque de rétention de poids (92) disposée de façon à être opposée à l'élément de came (87), et qui entraîne la masselotte (93) au moyen de la force centrifuge accompagnant la rotation de l'arbre d'entraînement (32) pour déplacer la poulie mobile (74) dans la direction axiale, et
un deuxième mécanisme de déplacement (75b) qui comprend un bras d'entraînement (114) monté de manière relativement rotative et axialement non mobile sur la flasque (74a) de poulie mobile via un palier à roulement (115) et qui transmet la force d'entraînement d'un actionneur (123) lié au bras d'entraînement (114) à la poulie mobile (74) pour ainsi déplacer la poulie mobile (74) dans la direction axiale,
**caractérisée en ce que**
l'arbre d'entraînement (114) présente une première partie (116) de bras qui s'étend vers un côté radialement externe de la poulie mobile (74) et une deuxième partie (117) de bras qui se courbe depuis une extrémité de la première partie (116) de bras, s'étend dans la direction de la largeur du véhicule, et est disposée radialement à l'extérieur de l'élément de came (87),
et au moins une partie de la deuxième partie (117) de bras chevauche la poulie mobile (74) comme vu dans une direction de l'axe de rotation (Xis) de l'arbre d'entraînement (32).

2. Transmission à variation continue du type à courroie trapézoïdale à commande électronique montée sur un véhicule selon la revendication 1, comprenant
un guide (94) qui est formé sur l'élément de came (87) et guide le mouvement dans une direction axiale de la plaque de rétention de poids (92), et
une partie de dégagement (118) qui est formée sur la première partie (116) de bras et qui contourne une trajectoire du guide (94) définie lorsque l'arbre d'entraînement (32) est en rotation.
